# EUROPÄISCHE PATENTANMELDUNG

(11) **EP 2 630 870 A1**
(43) Veröffentlichungstag der Anmeldung: **28.08.2013**
(21) Anmeldenummer: 13000769.3
(22) Anmeldetag: 14.02.2013
(51) Int. Cl.: A23G 1/10, A23G 1/12, B02C 4/28

(54) **Walzensystem**

(30) Priorität: 27.02.2012 DE 202012002041 U
(71) Anmelder: F.B. LEHMANN GmbH, 73431 Aalen (DE)
(72) Erfinder: Weinschenk, Frank, 73431 Aalen (DE); Peters, Christian, 73430 Aalen (DE)
(74) Vertreter: Zeitler - Volpert - Kandlbinder

(57) **Zusammenfassung**

Die vorliegende Erfindung betrifft ein Walzensystem mit einer Walze sowie einer Abdichtbacke, die mittels einer Andrückvorrichtung gegen eine Stirnfläche der Walze gedrückt wird, aufweisend einen Druckverteiler, der die von der Andrückvorrichtung über eine erste Kontaktfläche auf den Druckverteiler ausgeübten Druckkräfte auf eine zweite, größere Kontaktfläche und/oder auf eine Mehrzahl von zweiten Kontaktflächen verteilt.

## Beschreibung

Die Erfindung betrifft ein Walzensystem mit mindestens einer Walze sowie mindestens einer Abdichtbacke, die mittels einer Andrückvorrichtung gegen eine Stirnfläche der Walze gedrückt wird.

Beispielsweise bei Walzensystemen, mit denen pastöses oder teigartiges Walzgut, wie beispielsweise Schokolade oder Kakaomasse, gewalzt wird, kommen sogenannten Abdichtbacken zum Einsatz, die zumindest randseitig an die Stirnflächen der Walzen gedrückt werden, um einen seitlichen Austritt von Walzgut zu verhindern. Um den Dichtspalt zwischen der Abdichtbacke sowie den dazugehörigen Stirnflächen der Walzen möglichst gering zu halten, kann vorgesehen sein, die Abdichtbacke kontinuierlich mittels einer Andrückvorrichtung, beispielsweise in Form eines pneumatischen oder hydraulischen Zylinders, mit einer definierten Andrückkraft anzudrücken. Dabei drückt der Zylinder mit seinem Kolben gegen eine Kontaktfläche der Abdichtbacke.

Derartige Abdichtbacken werden vielfach aus Kunststoff gefertigt, wobei die dabei zum Einsatz kommenden Fertigungsverfahren nur eine Herstellung der regelmäßig großflächigen und vergleichsweise dünnen Abdichtbacken mit relativ schlechten Planheitstoleranzen ermöglichen. Diese unzureichende Planheit kann dazu führen, dass die Abdichtbacken nicht vollflächig an den Stirnflächen der Walzen anliegen, der Dichtspalt somit trotz der Belastung durch den Zylinder nicht gleichförmig klein ist und daher an einzelnen Stellen des Dichtspalts Walzgut austreten kann. Ein Austreten von Walzgut ist nicht nur mit einem Walzgutverlust verbunden, sondern verursacht auch eine Verschmutzung der umliegenden Maschinenteile.

Ausgehend von diesem Stand der Technik lag der Erfindung die Aufgabe zu Grunde, ein verbessertes gattungsgemäßes Walzensystem anzugeben.

Diese Aufgabe wird durch den Gegenstand des unabhängigen Anspruchs 1 gelöst. Vorteilhafte Ausgestaltungen des erfindungsgemäßen Walzensystems sind Gegenstand der abhängigen Ansprüche und ergeben sich aus der nachfolgenden Beschreibung der Erfindung.

Die Erfindung löst die gestellte Aufgabe, indem bei einem gattungsgemäßen Walzensystem, das mindestens eine Walze sowie mindestens eine mittels mindestens einer Andrückvorrichtung gegen eine Stirnfläche der Walze gedrückte Abdichtbacke aufweist, die von der Andrückvorrichtung aufgebrachte Druckkraft besser bzw. gleichmäßiger über der Fläche der Abdichtbacke aufgebracht wird. Dies erfolgt erfindungsgemäß mittels eines Druckverteilers, der eine erste Kontaktfläche für einen Kontakt mit der Andrückvorrichtung sowie eine oder mehrere zweite Kontaktfläche(n) aufweist, über die die Druckkraft auf die Abdichtbacke übertragen wird. Die zweite Kontaktfläche(n) ist/sind (ggf. gemeinsam) größer als die erste Kontaktfläche und/oder - bei mehreren Kontaktflächen - ist deren Abstand voneinander zumindest größer als die Abmessungen der ersten Kontaktfläche, so dass sich eine bessere Verteilung der von der Andrückvorrichtung ausgeübten Druckkraft über der Fläche der Abdichtbacke ergibt.

Durch diese verbesserte Verteilung der von der Andrückvorrichtung aufgebrachten Druckkraft auf die Abdichtbacke können Undichtigkeiten zwischen der Stirnfläche der Walze sowie der Abdichtbacke, die sich insbesondere aus fertigungsbedingten Planheitsabweichungen der Abdichtbacken ergeben können, ausgeglichen werden und ein seitlicher Austritt von Walzgut durch den zwischen der Abdichtbacke und der Stirnfläche der Walze gebildeten Dichtspalt kann vermieden werden.

Ein weiterer Vorteil des erfindungsgemäßen Druckverteilers liegt darin, dass die von der Andrückvorrichtung aufgebrachte Druckkraft infolge der besseren Abdichtung zwischen Walze und Abdichtbacke relativ gering gehalten werden kann. Dadurch kann zum Einen eine leistungsschwächere und somit kostengünstigere Andrückvorrichtung zum Einsatz kommen und zum Anderen ein verminderter Verschleiß der Abdichtbacke erreicht werden.

Die erfindungsgemäße Ausgestaltung eines Walzensystems ist insbesondere dann vorteilhaft, wenn die Abdichtbacke (zumindest teilweise) aus Kunststoff ausgebildet ist, da derartige Abdichtbacken vielfach die beschriebenen fertigungsbedingten Planheitsabweichungen aufweisen können. Selbstverständlich lässt sich der erfindungsgemäße Druckverteiler auch bei Walzensystemen mit Abdichtbacken, die nicht aus Kunststoff, sondern beispielsweise aus Blech und insbesondere Stahlblech gefertigt sind, vorteilhaft anwenden. Ein Vorteil kann beispielsweise sein, dass solche Abdichtbacken aufgrund der besseren Druckeinleitung durch den Druckverteiler mit geringeren Toleranzanforderungen bezüglich der Planheit und somit gegebenenfalls kostengünstiger hergestellt werden können.

In einer bevorzugten Ausführungsform des erfindungsgemäßen Walzensystems kann vorgesehen sein, dass der Druckverteiler mindestens zwei, vorzugsweise mindestens drei Arme aufweist, die sich ausgehend von der ersten Kontaktfläche in unterschiedliche Richtungen erstrecken. Dabei weist vorzugsweise jeder der Arme eine oder mehrere (zweite) Kontaktflächen für eine Anlage an der Abdichtbacke auf. Ein solcher Druckverteiler kann kostengünstig aus (z.B. metallischen) Halbzeugen hergestellt werden, indem diese Halbzeuge beispielsweise lediglich auf Länge geschnitten, umgeformt und miteinander verschweißt werden.

Bei einer Ausgestaltung des Walzensystems mit mindestens zwei (parallel angeordneten) Walzen kann dann vorgesehen sein, dass sich zumindest einer der Arme an einem Abschnitt der Abdichtbacke abstützt, der sich in einen von den zwei Walzen ausgebildeten Spalt erstreckt. Dadurch wird die Abdichtbacke vorteilhafterweise im Bereich des Walzspalts der beiden Walzen, in dem durch das verdichtete Walzgut ein relativ großer Druck auf diese ausgeübt wird, von der Andrückvorrichtung über den Druckverteiler angedrückt.

Die Erfindung wird nachfolgend anhand eines in den Zeichnungen dargestellten Ausführungsbeispiels näher erläutert. In den Zeichnungen zeigt:
- Fig. 1:: ein erfindungsgemäßes Walzensystem in einer Vorderansicht;
- Fig. 2:: einen Ausschnitt der Fig. 1 in einer vergrößerten Darstellung;
- Fig. 3:: das Walzensystem gemäß Fig. 1 in einer Seitenansicht;
- Fig. 4:: den Druckverteiler des Walzensystems gemäß den Fig. 1 bis 3 in einer Draufsicht;
- Fig. 5:: den Druckverteiler gemäß Fig. 4 in einer ersten Seitenansicht; und
- Fig. 6:: den Druckverteiler gemäß Fig. 4 in einer zweiten Seitenansicht.

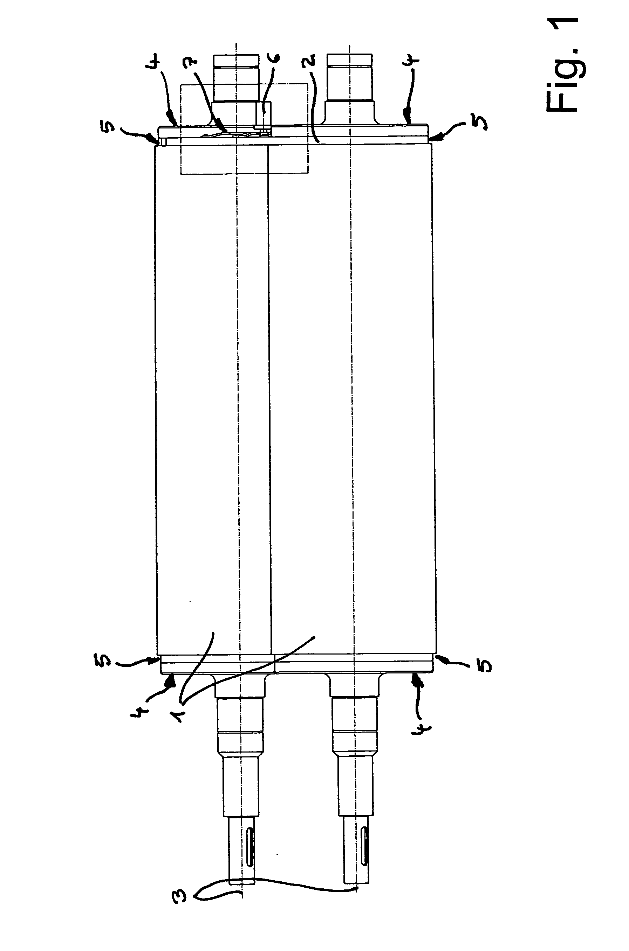

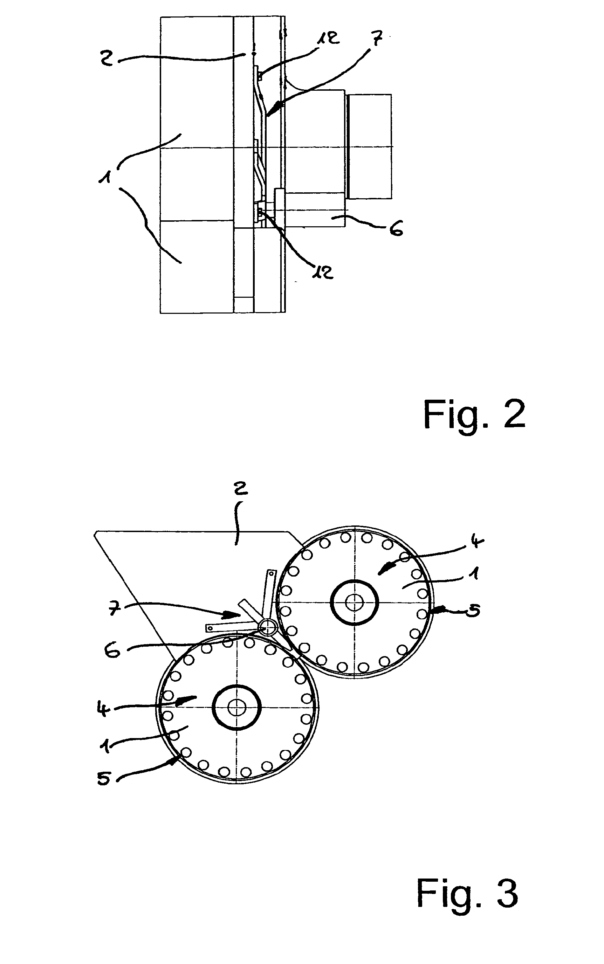

Die Figuren 1 bis 3 zeigen in verschiedenen Ansichten eine Ausführungsform eines erfindungsgemäßen Walzensystems. Dieses umfasst zwei parallel angeordnete Walzen 1, zwischen denen ein Walzspalt ausgebildet ist. Die beiden Walzen 1 werden von einem nicht dargestellten Walzenantrieb gegenläufig angetrieben, wobei die in der Fig. 3 rechts oben dargestellte Walze 1 im Gegenuhrzeigersinn und die in der Fig. 3 links unten dargestellte Walze 1 im Uhrzeigersinn rotiert wird. Auf der Einlassseite der beiden Walzen 1 wird - über einen nicht dargestellten Einschüttkasten - Walzgut zugeführt, das durch die gegenläufige Rotation der Walzen 1 in den Walzspalt getrieben wird.

An einem der beiden Enden der Walzen 1 ist eine Abdichtbacke 2 angeordnet (eine Anordnung jeweils einer Andichtbacke an beiden Enden ist ebenso möglich). Hierbei handelt es sich um ein flächiges Bauteil aus Kunststoff, das senkrecht zu den beiden Längsachsen 3 der Walzen 1 ausgerichtet ist und durch ein Anliegen an Abschnitten der Stirnflächen 4 (d.h. der längsaxialen Endseiten) der Walzen 1 ein seitliches Austreten von Walzgut verhindert.

Die beiden Walzen 1 weisen endseitig einen umlaufenden Absatz 5 auf, in dem jeweils ein entsprechend kreisbogenförmig verlaufender Abschnitt der Abdichtbacke 2 geführt ist. Dabei wird die Abdichtbacke 2 über eine Andrückvorrichtung in Form eines hydraulischen Zylinders 6 in Richtung der Längsachsen 3 der Walzen 1 bzw. in senkrechter Richtung bezüglich der (flächigen) Abdichtbacke 2 mit einer Druckkraft belastet. Dadurch wird die Abdichtbacke gegen den radialen Oberflächenabschnitt der Absätze 5 der beiden Walzen 1 (der wiederum ein Abschnitt der jeweiligen Stirnfläche 4 der Walzen 1 ist) gedrückt.

Die Abdichtbacke 2 bei dem dargestellten Beispiel eines erfindungsgemäßen Walzensystems ist vollständig aus Kunststoff hergestellt, was mit dem bekannten Fertigungsverfahren infolge der großflächigen und gleichzeitig dünnen Form der Abdichtbacke 2 mit relativ großen Planheitstoleranzen einhergeht. Diese relativ schlechte Planheit kann durch ein Andrücken mittels des Zylinders 6 nicht oder nicht vollständig ausgeglichen werden, so dass der zwischen den Walzen 1 und der Abdichtbacke 2 ausgebildete Dichtspalt lokal so breit sein könnte, dass damit ein relevanter Austritt von Walzgut einhergehen würde.

Erfindungsgemäß wird diese Problematik jedoch dadurch verhindert, dass der Zylinder 6 nicht direkt auf die Abdichtbacke 2 drückt, wie dies bei den bekannten gattungsgemäßen Walzensystemen der Fall ist, sondern ein Druckverteiler 7 zwischengeschaltet ist, der die von dem Zylinder 6 ausgeübte, relativ kleinflächige Druckbelastung auf einen größeren Bereich der Abdichtbacke 2 verteilt.

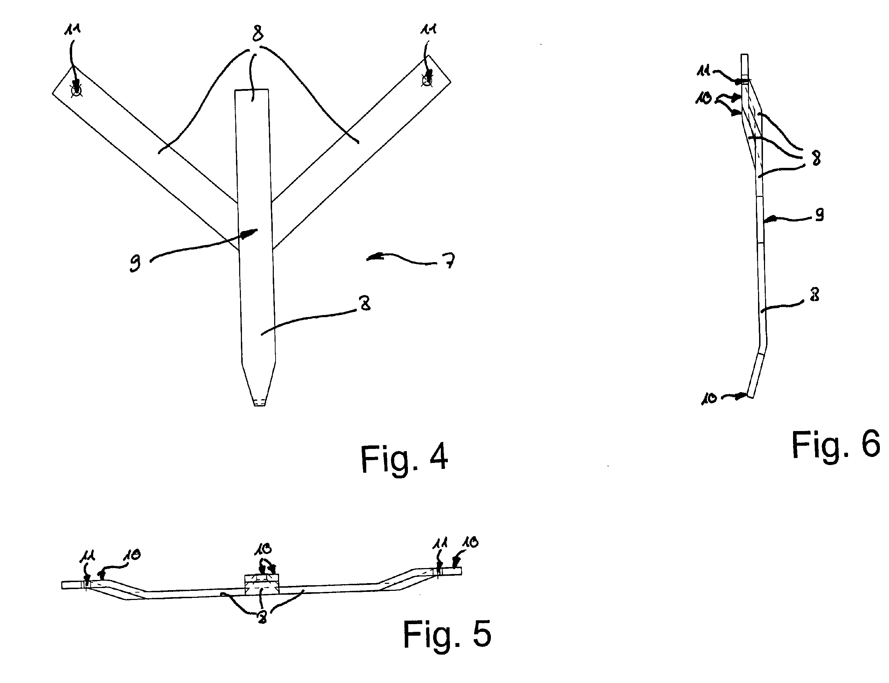

Dieser Druckverteiler 7 ist in den Figuren 4 bis 6 in verschiedenen Ansichten dargestellt. Er ist aus insgesamt drei, im Querschnitt rechteckigen Metallprofilen zusammengesetzt (z.B. verschweißt), die vier Arme 8 ausbilden, die sich von einem zentralen Druckbereich mit einer ersten Kontaktfläche 9, an der der Zylinder 6 ansetzt, ausgehend in verschiedene radiale Richtungen (bezüglich der Wirkungslinie der von dem Zylinder 6 ausgeübten Druckkraft) erstrecken.

Die Enden der drei in der Fig. 4 oben dargestellten Arme 8 sind doppelt, gegenläufig abgewinkelt, wodurch diese endseitig Auflageflächen 10 (zweite Kontaktflächen) ausbilden, mit denen diese an der Abdichtbacke 2 anliegen. Diese Auflageflächen 10 liegen dabei in derselben Ebene, die zu der von der ersten Kontaktfläche 9 ausgebildeten Ebene parallel verläuft.

Das Ende des in der Fig. 4 unten dargestellten Arms 8 verläuft pfeilförmig zugespitzt und ist lediglich einfach in Richtung der Abdichtbacke 2 abgewinkelt. Dieser Arm 8 bildet demnach eine Auflagefläche 10 (für eine Anlage an der Abdichtbacke 2) aus, die sehr schmal, annähernd linienförmig ist. Diese besondere Form des Endes dieses Arms 8 dient dazu, diesen möglichst weit in den von den Absätzen 5 der beiden Walzen 1 ausgebildeten Spalt ragen zu lassen, um den dortigen Abschnitt der Abdichtbacke 2, der durch das in dem Walzspalt komprimierte Walzgut besonders stark belastet ist, mit der von dem Zylinder 6 ausgeübten Druckkraft zu belasten und somit möglichst gut an den Abschnitten der Stirnflächen 4 der beiden Walzen 1 anliegen zu lassen. Die Auflagefläche 10 des in der Fig. 4 unten dargestellten Arms 8 liegt in derselben Ebene, wie die Auflageflächen 10 der drei anderen Arme 8.

Der Druckverteiler 7 ist über insgesamt zwei Verschraubungen 12 mit der Abdichtbacke 2 verbunden. Hierzu weisen zwei der Arme 8 im Bereich der jeweiligen Auflagefläche 10 entsprechende Durchgangsöffnungen 11 auf, durch die die Verschraubungen 12 ragen können.

## Patentansprüche

1. Walzensystem mit einer Walze (1) sowie einer Abdichtbacke (2), die mittels einer Andrückvorrichtung gegen eine Stirnfläche (4) der Walze (1) gedrückt wird, **gekennzeichnet durch** einen Druckverteiler (7), der die von der Andrückvorrichtung über eine erste Kontaktfläche (9) auf den Druckverteiler ausgeübten Druckkräfte auf eine zweite, größere Kontaktfläche und/oder auf eine Mehrzahl von zweiten Kontaktflächen verteilt.

2. Walzensystem nach Anspruch 1, **dadurch gekennzeichnet, dass** die Abdichtbacke (2) aus Kunststoff ausgebildet ist.

3. Walzensystem nach Anspruch 1 oder 2, **dadurch gekennzeichnet, dass** der Druckverteiler (7) mindestens zwei jeweils eine zweite Kontaktfläche ausbildende Arme (8) aufweist, die sich ausgehend von der ersten Kontaktfläche (9) in unterschiedliche Richtungen erstrecken.

4. Walzensystem nach Anspruch 3 mit zwei Walzen (1), **dadurch gekennzeichnet, dass** sich einer der Arme (8) mit seiner zweiten Kontaktfläche an einem Abschnitt der Abdichtbacke (2) abstützt, der sich in einen von den zwei Walzen (1) ausgebildeten Spalt erstreckt.
